# EUROPEAN PATENT APPLICATION

(11) **EP 4 717 368 A1**
(43) Date of publication of application: **01.04.2026**
(21) Application number: 25150905.5
(22) Date of filing: 09.01.2025
(51) Int. Cl.: B09B 3/00

(54) **KITCHEN WASTE TREATMENT EQUIPMENT AND OPERATION METHOD THEREOF**

(30) Priority: 26.09.2024 TW 113136782
(71) Applicant: Chung Cin Enterprise Co., Ltd., Taipei City 114518 (TW)
(72) Inventor: Wang, Jia-Chang, 114518 Taipei City (TW); Chen, Li-Hsien, 114518 Taipei City (TW); Chung, Meng-Yun, 114518 Taipei City (TW); Lee, Guan-Chiun, 114518 Taipei City (TW); Hung, Yu, 114518 Taipei City (TW); Wang, Lu-Kai, 114518 Taipei City (TW); Liang, Hua-Yu, 114518 Taipei City (TW)
(74) Representative: Stevens Hewlett & Perkins

(57) **Abstract**

To solve the problems of low fermentation efficiency, easy blockage, and single operation mode in traditional kitchen waste treatment equipment, this invention provides a kitchen waste treatment equipment, including: a compartment part, equipped with an outer compartment and an inner shaft and divided by a plurality of partitions into at least one compartment; a plurality of paddle brackets connected to the inner shaft; a plurality of paddles, arranged on the plurality of paddle brackets; a driving device, connected to the inner shaft; and a rotating mechanism, supporting and rotating the outer compartment; wherein the driving device rotates the inner shaft to different angles for selecting a concentration mode or a propulsion mode to drive accordingly the plurality of paddles with at least one angle direction on the plurality of paddle brackets to cooperate with the rotation of the outer compartment.

## Description

### BACKGROUND OF THE INVENTION

### 1. Field of the Invention

The present invention relates generally to a kitchen waste treatment equipment and an operation method thereof, and more particularly, to a kitchen waste treatment equipment to solve the problems of low reaction efficiency, easy clogging, and single operation mode in a traditional kitchen waste treatment equipment.

### 2. The Prior Arts

There are three main methods for processing kitchen waste: composting, burying, and incineration. Among the three methods, only composting is regarded as the reuse of resources. Burying and incineration are considered as garbage destruction, which is harmful to the environment. With the ubiquitous environmental awareness and the acceleration of urbanization, a variety of household kitchen waste treatment equipment has appeared on the market to address the issue of increasing amount of kitchen waste generated by urban households year by year. However, these devices also face some challenges in usage, mainly including low reaction efficiency and single operation mode.

Most of the common structures of current kitchen waste treatment products include an upright outer tank and an inner barrel, with rotating blades installed at the bottom of the barrel. The kitchen waste is broken down and dried by the blade rotation into small particles. Many kitchen waste treatment devices are only used for drying, but the particles themselves have not yet begun the reaction process, and only in a very small proportion even if there is reaction. In addition, when the traditional kitchen waste treatment devices operate, only the middle blade rotates to stir, while the barrel stays stationary, resulting in the following shortcomings: low mixing efficiency: because only the blades are stirring, kitchen waste may be concentrated in certain areas of the barrel, while other parts are not stirred, resulting in uneven mixing and affecting the processing effect; prone to clogging: the stationary barrel is prone to getting stuck and can easily cause kitchen waste to accumulate in certain areas, especially some larger or entangled kitchen waste, which may entangle the blades, causing equipment failure or requiring frequent cleaning; dead corners: the issue of dead corners for mixing may also occur as the stationary barrel will form some dead corners that cannot be stirred, these dead corners are easy to accumulate residue, and long-term use may cause hygiene problems or produce odors; high energy consumption: uneven mixing will lead to extended processing time, and the equipment will take longer to complete the kitchen waste treatment, which increases energy consumption; uneven wear, because the barrel does not move, the blades run on a fixed trajectory, resulting in higher wearing of the blades and barrel in some areas, while other areas are lightly worn, shortening the service life of the equipment; limited processing capacity: because the mixing efficiency is low and prone to clogging, the processing capacity of traditional kitchen waste treatment devices may be limited and cannot handle large quantities or various types of kitchen waste.

Furthermore, during the treatment process, the known household kitchen waste treatment equipment stirs unevenly and has a slow reaction speed, thus, cannot quickly decompose the kitchen waste produced by households, causing kitchen waste to stay inside the equipment for too long, which not only affects the treatment efficiency, but may also cause odor problems and reduce the practicality of the equipment. Also, known household kitchen waste treatment equipment has a relatively simple functional design that can only perform basic single kitchen waste treatment operations. It is unable to perform multi-mode flexible treatment to accelerate kitchen waste reaction speed. This limits the scope of application and processing effects of the equipment, making it unable to meet the diverse needs of household kitchens.

### SUMMARY OF THE INVENTION

In order to solve the aforementioned problems, the objective of the present invention is to provide a kitchen waste treatment equipment, able to directly stir and react the kitchen waste evenly. The present invention provides a kitchen waste treatment equipment, including: a compartment part, equipped with an outer compartment and an inner shaft, and a plurality of partition dividing the compartment part to form at least one compartment; a plurality of paddle brackets, connected to the inner shaft; a plurality of paddles, arranged on the plurality of paddle brackets; a driving device, connected to the inner shaft; and a rotating mechanism, supporting and rotating the outer compartment; wherein the driving device rotates the inner shaft to different angles for selecting a concentration mode or a propulsion mode to drive accordingly the plurality of paddles with at least one angle direction on the plurality of paddle brackets in the at least one compartment to cooperate with the rotation of the outer compartment.

According to an embodiment of the present invention, the present invention further includes a feeding part and a discharging part, respectively connected to both ends of the compartment part; the feeding part further including: a chute upper cover, a chute, a circuit cover, a bearing, a central shaft connecting block, and a baffle; the discharging part further including: a bracket and a chute; the compartment part further including: a discharging compartment cover, a compartment plate, a compartment plate connecting rod, a quartz glass tube, an auxiliary compartment plate, and a feed compartment cover.

According to an embodiment of the present invention, the driving device further includes a reducer and/ or a motor; a coupler, connecting the driving device and the inner shaft; at least one shaft connecting block, connecting the segmented inner shaft, the concentration mode or the propulsion mode respectively corresponding to combinations of the plurality of paddle of different angle directions; the rotating mechanism further includes: a rubber axle, a frame plate, a rubber wheel, a gear, a motor, a motor base, and a belt.

According to an embodiment of the present invention, two ends of the plurality of paddles are respectively clamped on two adjacent paddle brackets in a circumferential direction of the outer compartment, and the inner shaft in the at least one compartment of the compartment part can be segmented to cooperate with any one of the concentration mode and the propulsion mode to accordingly drive the plurality of paddles with different angle directions on the plurality of paddle brackets to cooperate with the rotation of the outer compartment.

According to an embodiment of the present invention, in the concentration mode, in at least one compartment, the angle directions of at least two paddles on the two adjacent paddle brackets in the circumferential direction of the outer compartment located on both sides of a center line of each compartment and cooperating with the rotation of the outer compartment are not parallel to each other; in the propulsion mode, in at least one compartment, the angle directions of at least two paddles on the two adjacent paddle brackets in the circumferential direction of the outer compartment located on both sides of the center line of each compartment and cooperating with the rotation of the outer compartment are parallel to each other.

The present invention provides an operation method for a kitchen waste treatment equipment, applicable to a kitchen waste treatment equipment. The method includes the following steps: putting a kitchen waste into a compartment part having an outer compartment and an inner shaft, wherein the compartment part is divided by a plurality of partitions into at least one compartment; selecting a concentration mode or a propulsion mode for operation, and starting a driving device in the at least one compartment to accordingly rotate the inner shaft to different angles, through connections of the driving device to the inner shaft, and a plurality of paddle brackets to the inner shaft, selectively driving the plurality of paddles with at least one angle direction of rotation on the plurality of paddle brackets to cooperate with the rotation of the outer compartment; and activating a rotating mechanism connected to a rotating wheel set, which contacts and rotates the outer compartment.

According to an embodiment of the present invention, in the concentration mode, in at least one compartment, the angle directions of at least two paddles on the two adjacent paddle brackets in the circumferential direction of the outer compartment located on both sides of the center line of each compartment and cooperating with the rotation of the outer compartment are not parallel to each other.

According to an embodiment of the present invention, in the propulsion mode, in at least one compartment, the angle directions of at least two paddles on the two adjacent paddle brackets in the circumferential direction of the outer compartment located on both sides of the center line of each compartment and cooperating with the rotation of the outer compartment are parallel to each other.

According to an embodiment of the present invention, the inner shaft in the at least one compartment of the compartment part can be segmented to cooperate with any one of the concentration mode and the propulsion mode to accordingly drive the plurality of paddles with different angle directions on the plurality of paddle brackets to cooperate with the rotation of the outer compartment.

According to an embodiment of the present invention, the concentration mode or the propulsion mode respectively corresponds to a combination of the plurality of paddles with different angle directions.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic view of the kitchen waste treatment equipment of the present invention;
FIG. 2 is a schematic view of the interior of the compartment of the kitchen waste treatment equipment of the present invention;
FIG. 3 is an exploded perspective view of the interior of the compartment of the kitchen waste treatment equipment of the present invention;
FIG. 4 is an exploded perspective view of the feeding part of the kitchen waste treatment equipment of the present invention;
FIG. 5 is an exploded perspective view of the discharging part of the kitchen waste treatment equipment of the present invention;
FIG. 6 is an exploded perspective view of the compartment part of the kitchen waste treatment equipment of the present invention;
FIG. 7 is an exploded perspective view of the rotating mechanism of the kitchen waste treatment equipment of the present invention;
FIG. 8 is a schematic view of the angle direction of the paddle of the compartment part of the kitchen waste treatment equipment of the present invention;
FIG. 9 is a schematic view of the operation of the kitchen waste treatment equipment of the present invention;
FIG. 10 is a schematic view of the operation of the kitchen waste treatment equipment of the present invention;
FIG. 11 is a schematic view of the operation of the kitchen waste treatment equipment of the present invention;
FIG. 12 is a schematic view of the operation of the kitchen waste treatment equipment of the present invention;
FIG. 13 is a schematic view of the operation of the kitchen waste treatment equipment of the present invention;
FIG. 14 is a schematic view of the operation of the kitchen waste treatment equipment of the present invention;
FIG. 15 is a schematic view of the operation of the kitchen waste treatment equipment of the present invention; and
FIG. 16 is a schematic view of the operation of the kitchen waste treatment equipment of the present invention;

### DETAILED DESCRIPTION OF THE PREFERRED EMBODIMENT

The inventive concept will be explained more fully hereinafter with reference to the accompanying drawings in which exemplary embodiments of the inventive concept are shown. Advantages and features of the inventive concept and methods for achieving the same will be apparent from the following exemplary embodiments, which are set forth in more details with reference to the accompanying drawings. However, it should be noted that the present inventive concept is not limited to the following exemplary embodiments, but may be implemented in various forms. Accordingly, the exemplary embodiments are provided merely to disclose the inventive concept and to familiarize those skilled in the art with the type of the inventive concept. In the drawings, exemplary embodiments of the inventive concepts are not limited to the specific examples provided herein and are exaggerated for clarity.

The terminology used herein is used to describe particular embodiments only, and is not intended to limit the present invention. As used herein, the singular terms "a" and "the" are intended to include the plural forms as well, unless the context clearly dictates otherwise. As used herein, the term "and/or" includes any and all combinations of one or more of the associated listed items. It will be understood that when an element is referred to as being "connected" or "coupled" to another element, it can be directly connected or coupled to the other element or intervening elements may be present.

Similarly, it will be understood that when an element (e.g., a layer, region, or substrate) is referred to as being "on" another element, it can be directly on the other element or intervening elements may be present. In contrast, the term "directly" means that no intervening elements are present. It should be further understood that when the terms "comprising" and "including" are used herein, it is intended to indicate the presence of stated features, steps, operations, elements, and/or components, but does not exclude one or more other features, steps, operations, elements, components, and/or the presence or addition of groups thereof.

Furthermore, exemplary embodiments in the detailed description are set forth in cross-section illustrations that are idealized exemplary illustrations of the present inventive concepts. Accordingly, the shapes of the exemplary figures may be modified according to manufacturing techniques and/or tolerable errors. Therefore, the exemplary embodiments of the present inventive concept are not limited to the specific shapes shown in the exemplary figures, but may include other shapes that may be produced according to the manufacturing process. The regions illustrated in the figures have general characteristics and are used to illustrate specific shapes of elements. Therefore, this should not be considered limited to the scope of this creative concept.

It will also be understood that, although the terms "first," "second," "third," etc. may be used herein to describe various elements, these elements should not be limited by these terms. These terms are only used to distinguish each element. Thus, a first element in some embodiments could be termed a second element in other embodiments without departing from the teachings of the present creation. Exemplary embodiments of aspects of the present inventive concept illustrated and described herein include their complementary counterparts. Throughout this specification, the same reference numbers or the same designators refer to the same elements.

Furthermore, example embodiments are described herein with reference to cross-sectional and/or planar views, which are illustrations of idealized example illustrations. Accordingly, deviations from the shapes shown, for example, caused by manufacturing techniques and/or tolerances, are expected. Accordingly, the exemplary embodiments should not be considered limited to the shapes of the regions shown herein, but are intended to include deviations in shapes resulting from, for example, manufacturing. Thus, the regions illustrated in the figures are schematic and their shapes are not intended to illustrate the actual shape of a region of a device and are not intended to limit the scope of example embodiments.

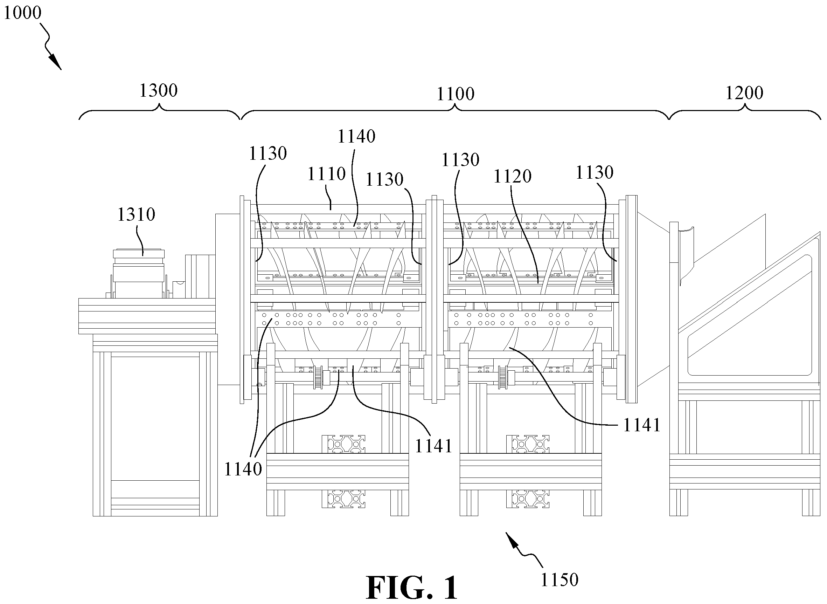

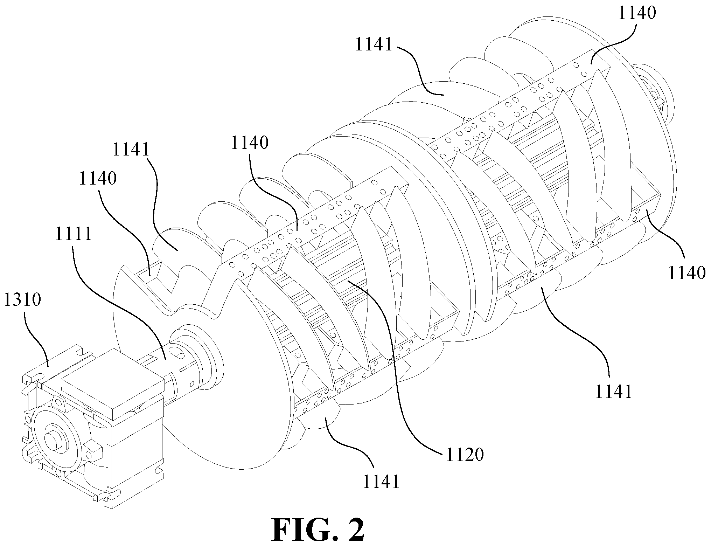

As shown in FIGS. 1 to 3, the kitchen waste treatment equipment 1000 includes: a compartment part 1100, which is provided with an outer compartment 1110 and an inner shaft 1120, and is divided by a plurality of partitions 1130 to form at least one compartment; a plurality of paddle brackets 1140, connected to the inner shaft 1120; a plurality of paddles 1141, arranged on the plurality of paddle brackets 1140; a driving device 1310, connected to the inner shaft 1120; and a rotating mechanism 1150, supporting and rotating the outer compartment 1110. The main feature of the present invention is that the outer compartment 1110 rotates through the rotating mechanism 1150, and the plurality of paddles 1141 are fixed to the plurality of paddle brackets 1140. The kitchen waste or waste raw materials to be treated inside are moved only by changing the angle direction of the plurality of paddles 1141 and cooperating with the rotation of the outer compartment. Wherein the driving device 1310 rotates the inner shaft 1120 to different angles for selecting the concentration mode or the propulsion mode to drive accordingly the plurality of paddles 1141 with at least one angle direction on the plurality of paddle brackets 1140 in the at least one compartment to cooperate with the rotation of the outer compartment 1110. The concentration mode can be used to vigorously stir and crush kitchen waste, while the propulsion mode can be used to gradually push the processed kitchen waste to the next processing stage or discharge. By adjusting the rotation angle of the inner shaft 1120 to adapt to different processing needs, the flexibility and adaptability of the equipment of the present invention is improved.

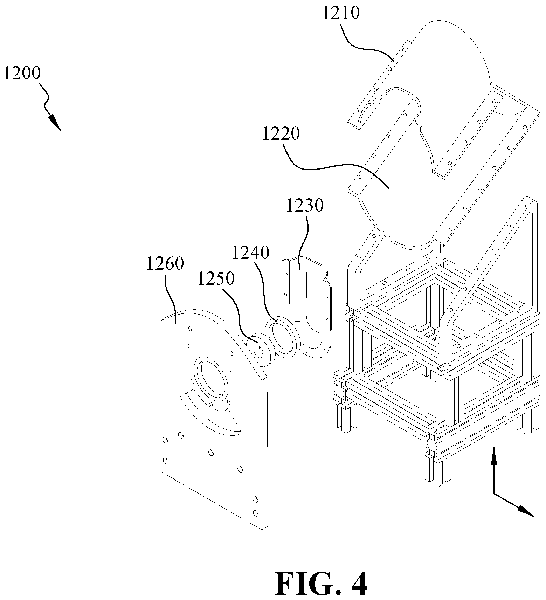

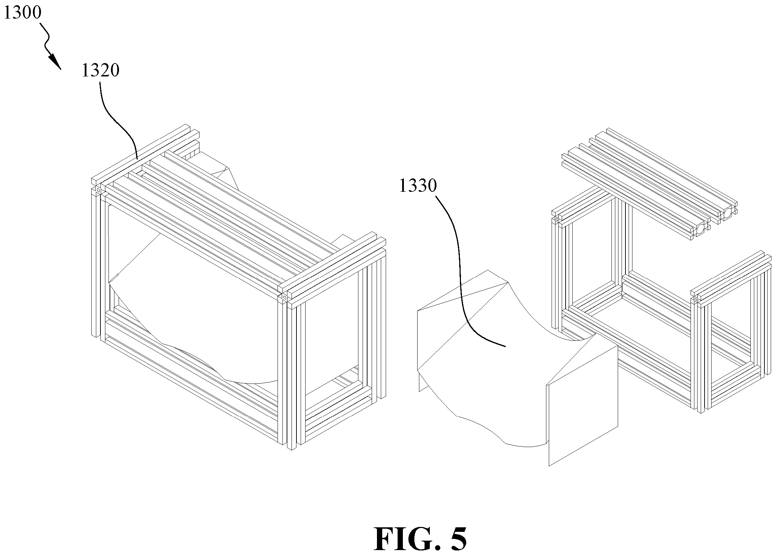

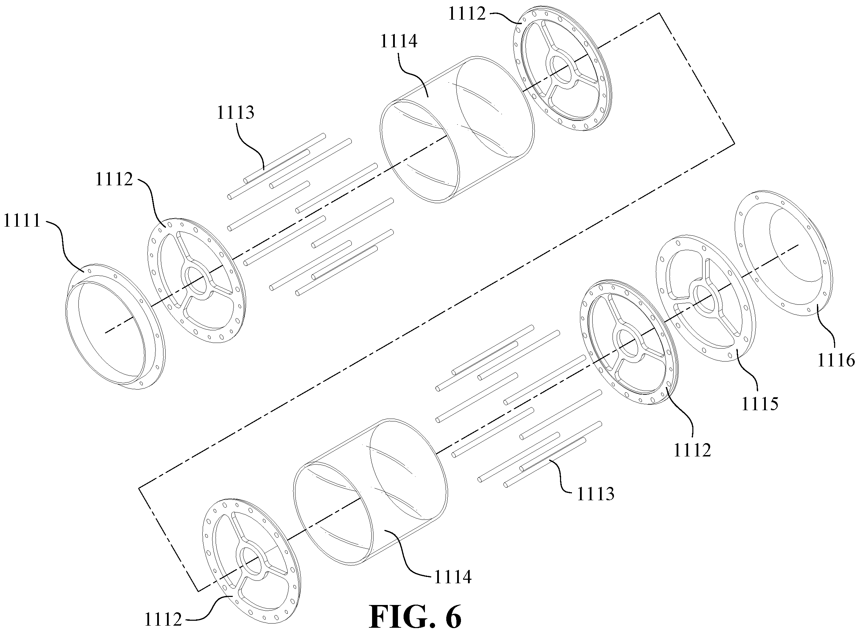

As shown in FIGS. 4 to 6, the kitchen waste treatment equipment of the present invention further includes a feeding part 1200 and a discharging part 1300, which are respectively connected to both ends of the compartment part 1100 as shown in FIG. 1. The feeding part 1200 includes: a chute upper cover 1210, a chute 1220, a circuit cover 1230, a bearing 1240, a central shaft connecting block 1250, a baffle 1260, and a specific shape opening of the baffle 1260, such as a fan shape, for controlling the feeding speed and amount to prevent too much waste from entering the compartment part 1100 at the same time, ensuring the processing efficiency and effect. The discharging part 1300 includes: a bracket 1320 and a chute 1330. The compartment part 1100 includes: a discharging compartment cover 1111, a compartment plate 1112, a compartment plate connecting rod 1113, a quartz glass tube 1114, an auxiliary compartment plate 1115, and a feeding compartment cover 1116. The quartz glass tube 1114 is used to observe and assist the photocatalytic effect, thereby improving the treatment effect.

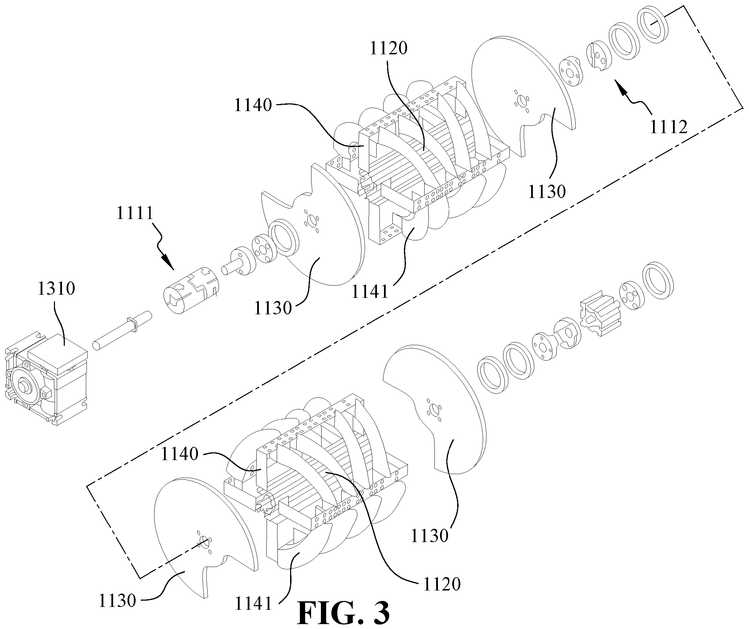

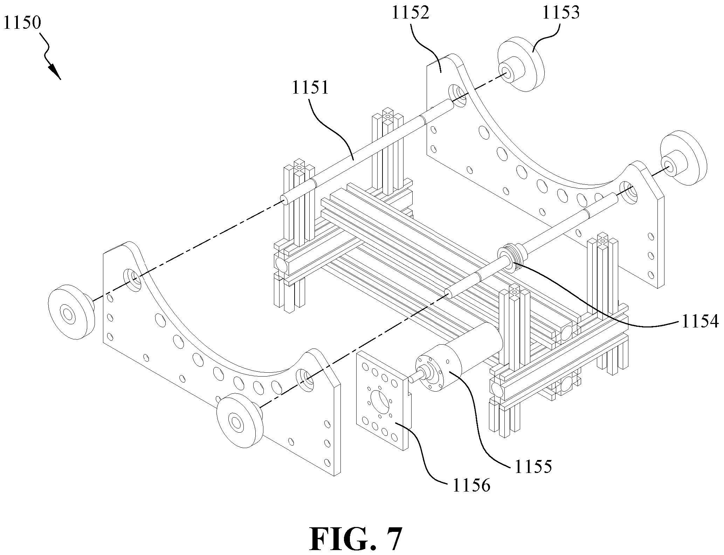

As shown in FIGS. 3 and 7, the driving device 1310 includes a reducer and/or a motor to ensure that the rotation speed and torque of the inner shaft 1120 can be accurately adjusted as needed and provide an appropriate power to drive the equipment; a coupler 1111, connecting the driving device 1310 and the inner shaft 1120 to reduce loss and mechanical wear; at least one shaft connecting block 1112, connecting the segmented inner shaft 1120 so that it can be flexibly combined and adjusted as needed to adapt to different operations. The concentration mode or the propulsion mode respectively corresponds to different combinations of the plurality of paddles with different angle directions, so that the equipment can be adjusted according to different processing needs to achieve the best processing effect. The rotating mechanism 1150 includes: a rubber axle 1151, a frame plate 1152, a rubber wheel 1153, a gear 1154, a motor 1155, a motor base 1156, and a belt. The reducer can be driven by a stepper motor; the belt (not shown) is connected between the gear 1154 and the motor 1155 to transmit rotation, and to rotate the gear and the co-axle rubber wheel 1153 as well as to rotate the outer compartment 1110. These structural designs enable the kitchen waste treatment equipment to flexibly and accurately control the movement of the inner shaft and paddles in different operating modes, ensuring the efficiency and stability of the kitchen waste treatment process. At the same time, the design of the rubber wheel 1153 and reducer provides effective support and power adjustment, further improving the performance and reliability of the equipment.

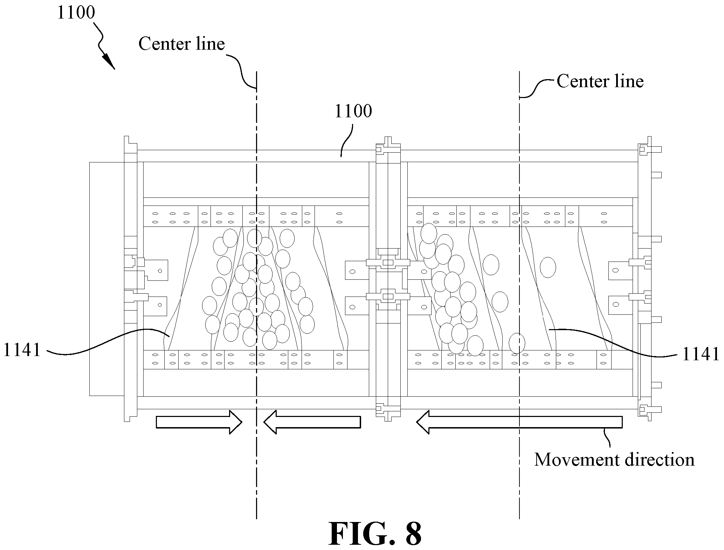

FIG. 8 is a schematic view of the angle direction of the paddles of the compartment of the kitchen waste treatment equipment of the present invention. Also referring to FIG. 1, the two ends of the plurality of paddles 1141 are respectively fixed on the two adjacent paddle brackets 1140 in the circumferential direction of the outer compartment 1110. The inner shaft (not shown) in at least one compartment of the compartment part 1100 can be segmented to cooperate with any one of the concentration mode and the propulsion mode, and accordingly drive the plurality of paddles 1141 with different angle directions on the plurality of paddle brackets 1140 to cooperate with the rotation of the outer compartment 1110.

As shown in FIG. 8, the previous compartment can be set to the propulsion mode, and the plurality of paddles 1141 with different angle directions on the plurality of paddle brackets 1140 are driven accordingly to cooperate with the rotation of the outer compartment 1110, so that the angle directions of the plurality of paddles 1141 in the previous compartment are parallel to each other, so as to push the waste into the next compartment to ensure that the waste in the equipment moves smoothly to prevent clogging and backlog. The next compartment can be set to the concentration mode, and accordingly drive the plurality of paddles 1141 with different angle directions on the plurality of paddle brackets 1140 to cooperate with the rotation of the outer compartment 1110, so that the angle directions of the plurality of paddles 1141 in the next compartment are non-parallel to each other, so as to concentrate the waste toward the center, which helps the waste to be fully mixed and reacted, and enhances the processing effect and efficiency.

In addition, the inner shaft 1120 can be selected to operate in the concentration mode or the propulsion mode in different compartments as needed, so that the equipment can flexibly adapt to the material processing needs of different stages of the waste treatment. For example, the propulsion mode is selected when materials need to be pushed to the next compartment in the early stage, and the concentration mode is selected when centralized mixing is needed in the later stage. Such design improves the flexibility and adaptability of the equipment. The multi-compartment design allows material processing at different stages to be carried out in the same equipment. The propulsion mode ensures that the materials enter the next compartment smoothly from the previous compartment. The concentration mode ensures that the materials are fully mixed and reacted in the next compartment. Such continuous operation improves the reaction efficiency and quality. The automation of the inner shaft and paddle movement and mode switching reduces the need for manual intervention. The operator only needs to set the operation mode, and the equipment can complete the material advancement and concentration process by itself, saving manpower and time costs.

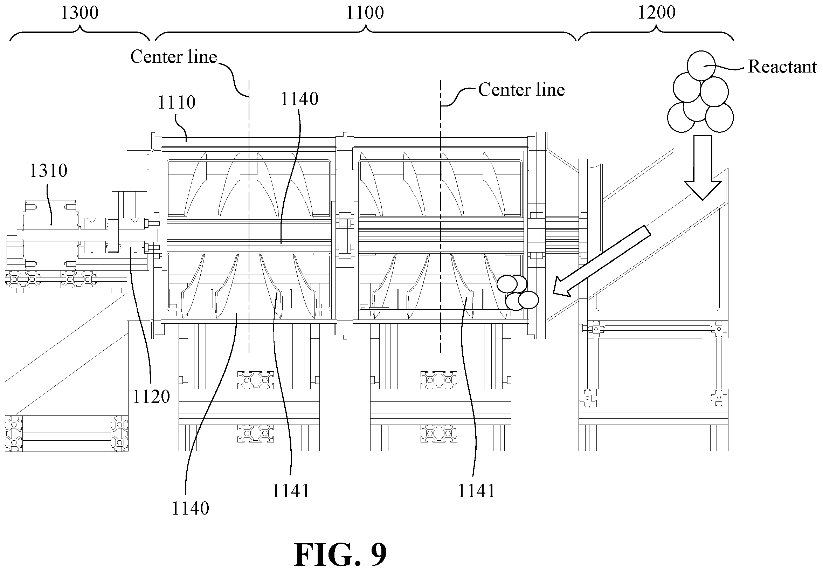

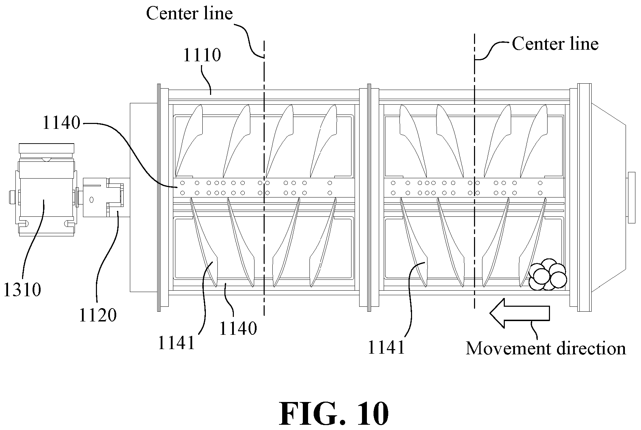

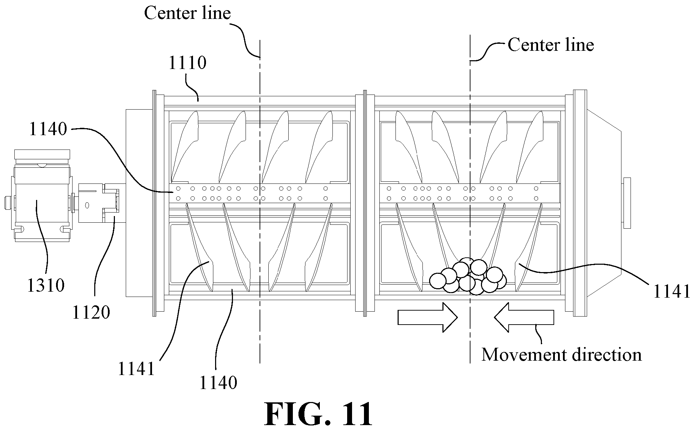

As shown in FIGS. 9 to 11, in the concentration mode, the driving device 1310 rotates the inner shaft 1120 to different angles, and accordingly drives the plurality of paddles 1141 with at least one angle direction on the plurality of paddle brackets 1140 in the at least one compartment to cooperate with the rotation of the outer compartment 1110. In at least one compartment, the angle directions of at least two paddles 1141 on the two adjacent paddle brackets 1140 in the circumferential direction of the outer compartment located on both sides of the center line of each compartment and cooperating with the rotation of the outer compartment 1110 are not parallel to each other. At the same time, FIGS. 9 to 11 show that when the waste is put into the feeding part 1200 and enter the compartment part 1100, the angle directions of at least two paddles 1141 located on both sides of the center line of each compartment and cooperating with the rotation of the outer compartment 1110 are not parallel to each other so as to concentrate the wastes at the central area of the compartment. The concentration effect of the paddles 1141 facilitates the wastes to mix fully and contact with the reaction bacteria and reaction medium to improve reaction speed and quality, thereby producing higher quality reaction products.

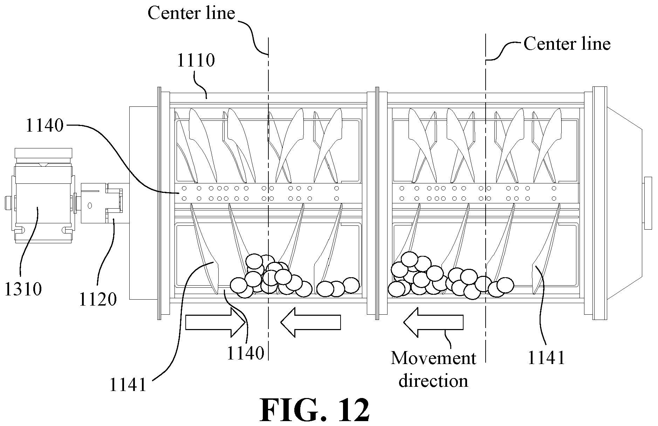

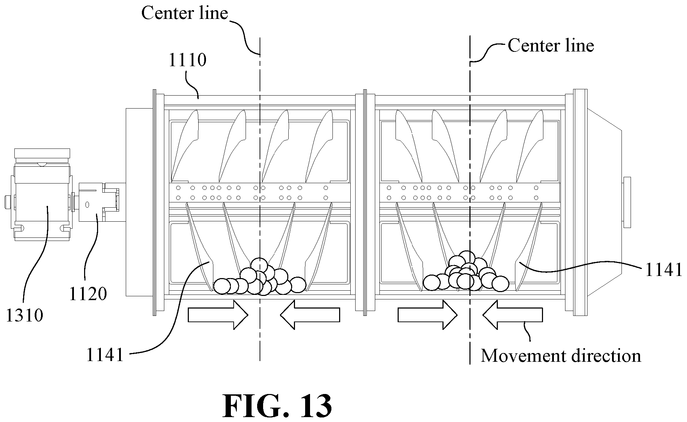

As shown in FIGS. 12 to 13, in the propulsion mode, the driving device 1310 rotates the inner shaft 1120 to different angles, and accordingly drives the plurality of paddles 1141 with at least one angle direction on the plurality of paddle brackets 1140 in the at least one compartment to cooperating with the rotation of the outer compartment 1110. In the propulsion mode, in at least one compartment, the angle directions of at least two paddles 1141 on the two adjacent paddle brackets 1140 in the circumferential direction of the outer compartment located on both sides of the center line of each compartment and cooperating with the rotation of the outer compartment 1110 are parallel to each other so as to propel the waste into the next compartment. In the next compartment, the concentration mode is set, and the driving device 1310 rotates the inner shaft 1120 to different angles, and accordingly drives the plurality of paddles 1141 with at least one angle direction on the plurality of paddle brackets 1140 in the at least one compartment to cooperate with the rotation of the outer compartment 1110. In at least one compartment, the angle directions of at least two paddles 1141 on the two adjacent paddle brackets 1140 in the circumferential direction of the outer compartment located on both sides of the center line of each compartment and cooperating with the rotation of the outer compartment 1110 are not parallel to each other so as to facilitate the waste to concentrate in the central area of the compartment for fully mixing. As shown in FIG. 13, in the concentration mode, the driving device 1310 rotates the inner shaft 1120 to different angles, and accordingly drives the plurality of paddles 1141 with at least one angle direction on the plurality of paddle brackets 1140 to cooperate with the rotation of the outer compartment 1110. The angle directions of at least two paddles 1141 on the two adjacent paddle brackets 1140 in the circumferential direction of the outer compartment located on both sides of the center line of each compartment and cooperating with the rotation of the outer compartment 1110 are parallel to each other so as to concentrate the waste to the central area for continuous reaction in each compartment.

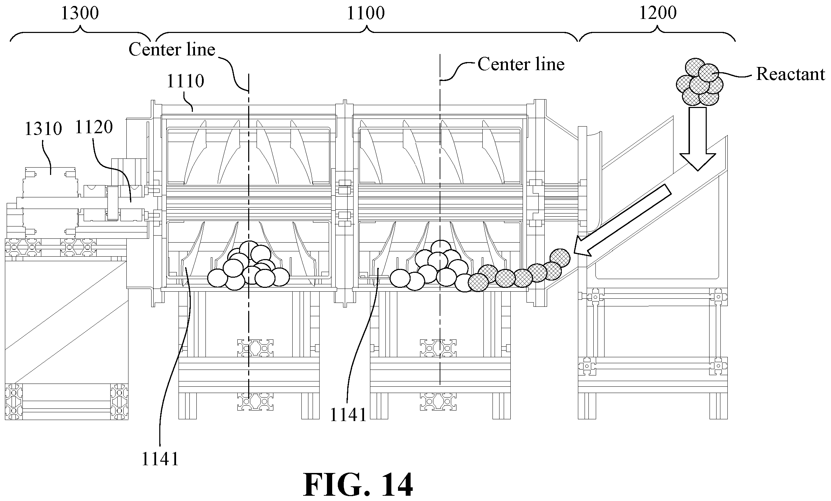

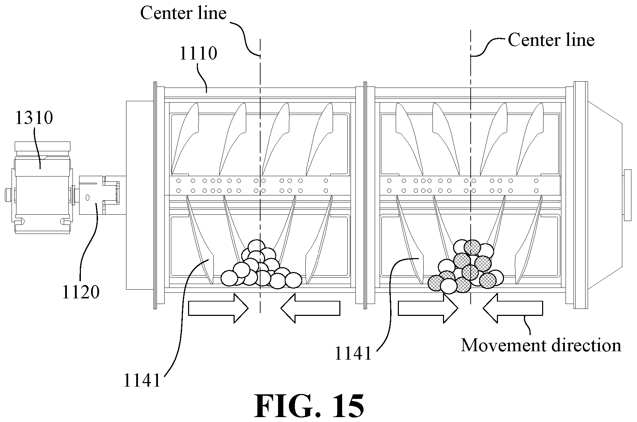

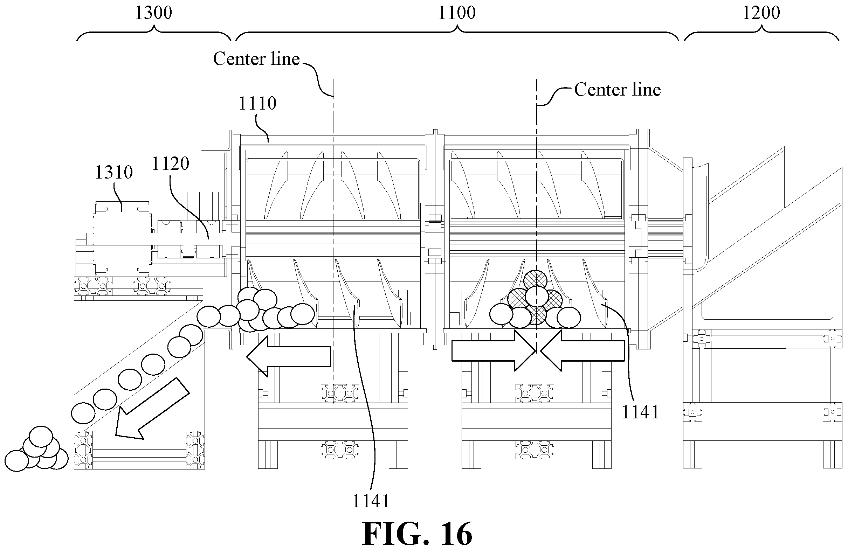

As shown in FIGS. 14 to 15, the reactant is added according to the requirement, and the reactant is put in from the feeding part 1200. When entering the compartment part 1100, the compartment is set to the concentration mode, and the driving device 1310 rotates the inner shaft 1120 to different angles, and correspondingly drives the plurality of paddles 1141 with at least one angle direction on the plurality of paddle brackets 1140 in the next compartment to cooperate with the rotation of the outer compartment 1110, wherein the angle directions of at least two paddles 1141 located on both sides of the center line of each compartment and cooperating with the rotation of the outer compartment 1110 are not parallel to each other, so as to concentrate the reactants toward the central area of the compartment. As shown in FIG. 16, after the reaction is completed, the propulsion mode is set, and the driving device 1310 rotates the inner shaft 1120 to different angles, and accordingly drives the plurality of paddles 1141 with at least one angle direction on the plurality of paddle brackets 1140 in the at least one compartment to cooperate with the rotation of the outer compartment 1110. In the compartment connected to the discharge part 1300, the angle directions of at least two paddles 1141 on both sides of the central line of the compartment and cooperating with the rotation of the outer compartment 1110 are parallel to each other, so as to push the reactants in the compartment to the discharge part 1300 to complete the delivery of the reactants.

The present invention provides an operation method for a kitchen waste treatment equipment. The method is applied to kitchen waste treatment equipment. The method includes the following steps: Step 1: Put the materials to be reacted into a compartment part having an outer compartment and an inner shaft, and divided by a plurality of partitions to form at least one compartment to provide a closed and separated environment to ensure that the reactants can be processed step by step in each compartment to avoid cross-contamination and material confusion; Step 2: Select a concentration mode or a propulsion mode, correspondingly activate the driving device in the at least one compartment to rotate the inner shaft to different angles, through connections of the driving device to the inner shaft, and a plurality of paddle brackets to the inner shaft, and selectively drive the plurality of paddles with at least one angle direction on the plurality of paddle brackets to cooperate with the rotation of the outer compartment, thereby improving the reaction quality and efficiency, and the smoothness of material transportation; Step 3: Start the rotating mechanism connected to the rotating wheel set, which contacts and rotates the outer compartment to keep stirring and moving the materials.

In the concentration mode, in at least one compartment, the angle directions of at least two paddles on the two adjacent paddle brackets in the circumferential direction of the outer compartment located on both sides of the center line of each compartment and cooperating with the rotation of the outer compartment are not parallel to each other. The movement of non-parallel paddles will generate an inward force to push the material towards the central area of the compartment, which facilitates the concentration of the reactant to the central area of the compartment, thereby improving the mixing and uniformity of the materials.

In the propulsion mode, in at least one of the compartments, in at least one compartment, the angle directions of at least two paddles on the two adjacent paddle brackets in the circumferential direction of the outer compartment located on both sides of the center line of each compartment and cooperating with the rotation of the outer compartment are parallel to each other. The parallel paddle design can effectively push the material forward along the length direction of the compartment. This design ensures that materials can move from the feeding end to the discharging end, achieving continuous processing and preventing materials from being clogged in a certain area.

The inner shaft in the at least one compartment of the compartment part can be segmented to cooperate with any one of the concentration mode and the propulsion mode, and accordingly drive the plurality of paddles with different angle directions on the plurality of paddle brackets to cooperate with the rotation of the outer compartment. The inner shaft can select the appropriate mode according to application requirement when processing different types of kitchen waste or during different stages of reaction.

The concentration mode or the propulsion mode respectively corresponds to a combination of the plurality of paddles with different angle directions. Different angle direction of the paddle designs can be optimized for different processing requirements and improve the reaction effect. For example, the angle direction of the paddle in the concentration mode can help improve the uniformity and mixing effect of the material; the angle direction of the paddle in the propulsion mode can promote the continuous processing and transfer of materials and improve the overall processing efficiency.

In summary, the present invention provides a kitchen waste treatment equipment and an operation method thereof. Through the design of innovative structure, the present invention effectively solves the problems of low reaction efficiency, easy clogging, and single operation mode in traditional equipment. The compartment part of the equipment is equipped with an outer compartment and an inner shaft, and is divided by a plurality of partitions to form at least one compartment, thus providing a multi-compartment material processing space. The driving device can accurately rotate the inner shaft to different angles to realize flexible switching between a concentration mode and a propulsion mode through the setting of combination of multiple paddle brackets and paddles. In the concentration mode, the paddles with non-parallel angle direction can concentrate the reactants to the center of the compartment, ensuring full mixing and uniform reaction of the materials; in the propulsion mode, the paddles with parallel angle direction can effectively push the materials and prevent the occurrence of clogging.

In addition, the design of the feeding part and the discharging part enables smoother material transportation and reduces the operation complexity. The stable support and rotation functions of the rotating mechanism further enhance the stability and reliability of the equipment. In short, the present equipment provides an efficient, reliable and flexible kitchen waste treatment solution by comprehensively considering all aspects of material handling.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A kitchen waste treatment equipment, comprising:
a compartment part, equipped with an outer compartment and an inner shaft, and a plurality of partition dividing the compartment part to form at least one compartment;
a plurality of paddle brackets, connected to the inner shaft;
a plurality of paddles, arranged on the plurality of paddle brackets;
a driving device, connected to the inner shaft; and
a rotating mechanism, supporting and rotating the outer compartment;
wherein the driving device rotates the inner shaft to different angles for selecting a concentration mode or a propulsion mode to drive accordingly the plurality of paddles with at least one angle direction on the plurality of paddle brackets in the at least one compartment to cooperate with the rotation of the outer compartment.

2. The kitchen waste treatment equipment according to claim 1, further comprising: a feeding part and a discharging part, respectively connected to both ends of the compartment part; the feeding part further comprising: a chute upper cover, a chute, a circuit cover, a bearing, a central shaft connecting block, and a baffle; the discharging part further comprising: a bracket and a chute; and the compartment part further comprising: a discharging compartment cover, a compartment plate, a compartment plate connecting rod, a quartz glass tube, an auxiliary compartment plate, and a feed compartment cover.

3. The kitchen waste treatment equipment according to claim 2, wherein the driving device further includes a reducer and/ or a motor; a coupler, connecting the driving device and the inner shaft; at least one shaft connecting block, connecting the segmented inner shaft, the concentration mode or the propulsion mode respectively corresponding to combinations of the plurality of paddle of different angle directions; the rotating mechanism further includes: a rubber axle, a frame plate, a rubber wheel, a gear, a motor, a motor base, and a belt.

4. The kitchen waste treatment equipment according to claim 1, wherein two ends of the plurality of paddles are respectively clamped on two adjacent paddle brackets in a circumferential direction of the outer compartment, and the inner shaft in the at least one compartment of the compartment part is capable of being segmented to cooperate with any one of the concentration mode and the propulsion mode to accordingly drive the plurality of paddles with different angle directions on the plurality of paddle brackets to cooperate with the rotation of the outer compartment.

5. The kitchen waste treatment equipment according to claim 4, wherein in the concentration mode, in at least one compartment, the angle directions of at least two paddles on the two adjacent paddle brackets in the circumferential direction of the outer compartment located on both sides of a center line of each compartment and cooperating with the rotation of the outer compartment are not parallel to each other; in the propulsion mode, in at least one compartment, the angle directions of at least two paddles on the two adjacent paddle brackets in the circumferential direction of the outer compartment located on both sides of the center line of each compartment and cooperating with the rotation of the outer compartment are parallel to each other.

6. An operation method for a kitchen waste treatment equipment, comprising the following steps: putting kitchen waste into a compartment part having an outer compartment and an inner shaft, wherein the compartment part is divided by a plurality of partitions into at least one compartment; selecting a concentration mode or a propulsion mode for operation, and starting a driving device in the at least one compartment to accordingly rotate the inner shaft to different angles, through connections of the driving device to the inner shaft, and a plurality of paddle brackets to the inner shaft, selectively driving the plurality of paddles with at least one angle direction on the plurality of paddle brackets to cooperate with the rotation of the outer compartment; and activating a rotating mechanism connected to a rotating wheel set, which contacts and rotates the outer compartment.

7. The operation method for the kitchen waste treatment equipment according to claim 6, wherein in the concentration mode, in at least one compartment, the angle directions of at least two paddles on two adjacent paddle brackets in a circumferential direction of the outer compartment located on both sides of a center line of each compartment and cooperating with the rotation of the outer compartment are not parallel to each other.

8. The operation method for the kitchen waste treatment equipment according to claim 6, wherein in the propulsion mode, in at least one compartment, the angle directions of at least two paddles on two adjacent paddle brackets in a circumferential direction of the outer compartment located on both sides of a center line of each compartment and cooperating with the rotation of the outer compartment are parallel to each other.

9. The operation method for the kitchen waste treatment equipment according to claim 6, wherein the inner shaft in the at least one compartment of the compartment part is capable of being segmented to cooperate with any one of the concentration mode and the propulsion mode to accordingly drive the plurality of paddles with different angle directions on the plurality of paddle brackets to cooperate with the rotation of the outer compartment.

10. The operation method for the kitchen waste treatment equipment according to claim 6, wherein the concentration mode or the propulsion mode respectively corresponds to a combination of the plurality of paddles with different angle directions.
